# EUROPEAN PATENT APPLICATION

(11) **EP 1 387 276 A2**
(43) Date of publication of application: **04.02.2004**
(21) Application number: 03291913.6
(22) Date of filing: 30.07.2003
(51) Int. Cl.: G06F 12/08

(54) **Methods and apparatus for managing memory**

(30) Priority: 31.07.2002 US 400391 P
(71) Applicant: Texas Instruments Incorporated, Dallas, Texas 75251 (US); Texas Instruments France, 06271 Villeneuve Loubet Cedex, Nice (FR)
(72) Inventor: Chauvel, Gerard, 06600 Antibes (FR); D'inverno, Dominique, 06270 Villeneuve-Loubet (FR); Lasserre, Serge, 83600 Frejus (FR)
(74) Representative: Holt, Michael

(57) **Abstract**

Methods and apparatuses are disclosed for managing a memory. In some embodiments, the apparatuses may include a processor, a memory coupled to the processor, a stack that exists in memory and contains stack data, and a memory controller coupled to the memory. The memory may further include multiple levels. The processor may issue data requests and the memory controller may adjust memory management policies between the various levels of memory based on whether the data requests refer to stack data. In this manner, data may be written to a first level of memory without allocating data from a second level of memory. Thus, memory access time may be reduced and overall power consumption may be reduced.

## Description

The present invention relates generally to processor based systems and more particularly to memory management techniques for the processor based system.

Many types of electronic devices are battery operated and thus preferably consume as little power as possible. An example is a cellular telephone. Further, it may be desirable to implement various types of multimedia functionality in an electronic device such as a cell phone. Examples of multimedia functionality may include, without limitation, games, audio decoders, digital cameras, etc. It is thus desirable to implement such functionality in an electronic device in a way that, all else being equal, is fast, consumes as little power as possible and requires as little memory as possible. Improvements in this area are desirable.

### BRIEF SUMMARY OF THE INVENTION

Methods and apparatuses are disclosed for managing a memory. In some embodiments, the apparatuses may include a processor, a memory coupled to the processor, a stack that exists in memory and contains stack data, and a memory controller coupled to the memory. The memory may further include multiple levels. The processor may issue data requests and the memory controller may adjust memory management policies between the various levels of memory based on whether the data requests refer to stack data. In this manner, data may be written to a first level of memory without allocating data from a second level of memory. Thus, memory access time may be reduced and overall power consumption may be reduced.

### NOTATION AND NOMENCLATURE

Certain terms are used throughout the following description and claims to refer to particular system components. As one skilled in the art will appreciate, semiconductor companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device, that connection may be through a direct connection, or through an indirect connection via other devices and connections. The term "allocate" is intended to mean loading data, such that memories may allocate data from other sources such as other memories or storage media.

### BRIEF DESCRIPTION OF THE DRAWINGS

For a more detailed description of the preferred embodiments of the present invention, reference will now be made to the accompanying drawings, wherein:
Figure 1 illustrates a processor based system according to the preferred embodiments;
Figure 2 illustrates an exemplary controller;
Figure 3 illustrates an exemplary memory management policy; and
Figure 4 illustrates an exemplary embodiment of the system described herein.

### DETAILED DESCRIPTION OF THE PREFERRED EMBODIMENTS

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to intimate that the scope of the disclosure, including the claims, is limited to that embodiment.

The subject matter disclosed herein is directed to a processor based system comprising multiple levels of memory. The processor based system described herein may be used in a wide variety of electronic systems. One example comprises using the processor based system in a portable, battery-operated cell phone. As the processor executes various system operations, data may be transferred between the processor and the multiple levels of memory, where the time associated with accessing each level of memory may vary depending on the type of memory used. The processor based system may implement one or more features that reduce the number of transfers among the multiple levels of memory. Consequently, the amount of time taken to transfer data between the multiple levels of memory may be eliminated and the overall power consumed by the processor based system may be reduced.

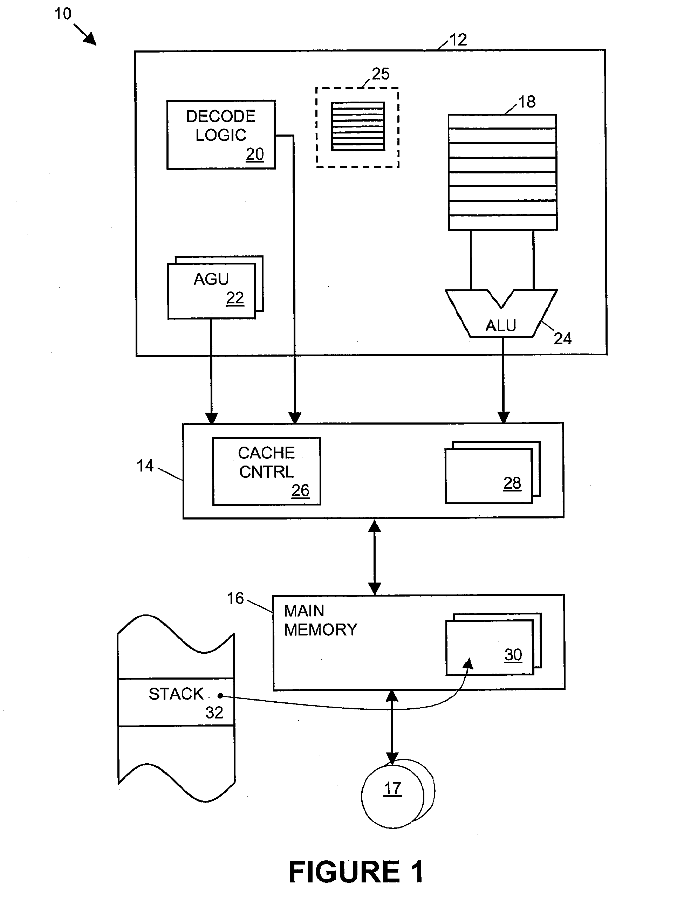

Figure 1 illustrates a system 10 comprising a processor 12 coupled to a first level or cache memory 14, a second level or main memory 16, and a disk array 17. The processor 12 comprises a register set 18, decode logic 20, an address generation unit (AGU) 22, an arithmetic logic unit (ALU) 24, and an optional micro-stack 25. Cache memory 14 comprises a cache controller 26 and an associated data storage space 28. The cache memory 14 may be implemented in accordance with the preferred embodiment described below and in copending applications entitled "Cache with multiple fill modes," filed June 9, 2000, serial no. 09/591,656; "Smart cache," filed June 9, 2000, serial no. 09/591,537; and publication no. 2002/0065990.

Main memory 16 comprises a storage space 30, which may contain contiguous amounts of stored data. For example, if the processor 12 is a stack-based processor, main memory 16 may include a stack 32. In addition, cache memory 14 also may contain portions of the stack 32. Stack 32 preferably contains data from the processor 12 in a last-in-first-out manner (LIFO). Register set 18 may include multiple registers such as general purpose registers, a program counter, and a stack pointer. The stack pointer preferably indicates the top of the stack 32. Data may be produced by system 10 and added to the stack by "pushing" data at the address indicated by the stack pointer. Likewise, data may be retrieved and consumed from the stack by "popping" data from the address indicated by the stack pointer. Also, as will be described below, selected data from cache memory 14 and main memory 16 may exist in the micro-stack 25. The access times and cost associated with each memory level illustrated in Figure 1 may be adapted to achieve optimal system performance. For example, the cache memory 14 may be part of the same integrated circuit as the processor 12 and main memory 16 may be external to the processor 12. In this manner, the cache memory 14 may have relatively quick access time compared to main memory 16, however, the cost (on a per-bit basis) of cache memory 14 may be greater than the cost of main memory 16. Thus, internal caches, such as cache memory 14, are generally small compared to external memories, such as main memory 16, so that only a small part of the main memory 16 resides in cache memory 14 at a given time. Therefore, reducing data transfers between the cache memory 14 and the main memory 16 may be a key factor in reducing latency and power consumption of a system.

Software may be executed on the system 10, such as an operating system (OS) as well as various application programs. As the software executes, processor 12 may issue effective addresses along with read or write requests, and these requests may be satisfied by various system components (e.g., cache memory 14, main memory 16, or micro-stack 25) according to a memory mapping function. Although various system components may satisfy read/write requests, the software may be unaware whether the request is satisfied via cache memory 14, main memory 16 or micro-stack 25. Preferably, traffic to and from the processor 12 is in the form of words, where the size of the word may vary depending on the architecture of the system 10. Rather than access a single word from main memory 16, each entry in cache memory 14 preferably contains multiple words referred to as a "cache line". The principle of locality states, that within a given period of time, programs tend to reference a relatively confined area of memory repeatedly. As a result, caching data in a small memory (e.g., cache memory 14), with faster access than the main memory 16 may capitalize on the principle of locality. The efficiency of the multi-level memory may be improved by infrequently writing cache lines from the slower memory (main memory 16) to the quicker memory (cache memory 14), and accessing the cache lines in cache memory 14 as much as possible before replacing a cache line.

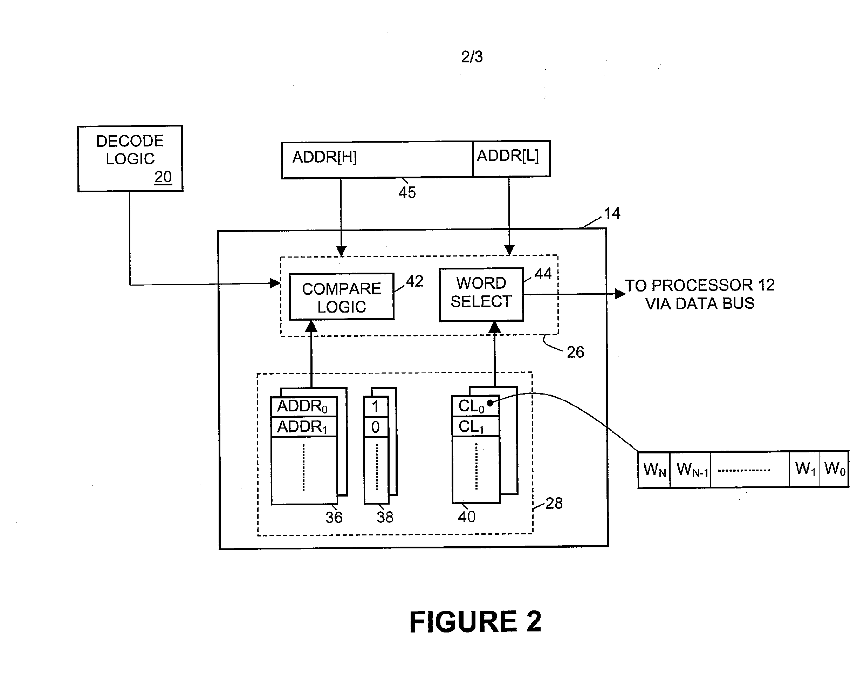

Controller 26 may implement various memory management policies. Figure 2 illustrates an exemplary implementation of cache memory 14 including the controller 26 and the storage space 28. Although some of the Figures may illustrate controller 26 as part of cache memory 14, the location of controller 26, as well as its functional blocks, may be located anywhere within the system 10. Storage space 28 includes a tag memory 36, valid bits 38, and multiple data arrays 40. Data arrays 40 contain cache lines, such as CL₀ and CL₁, where each cache line includes multiple data words as shown. Tag memory 36 preferably contains the addresses of data stored in the data arrays 40, e.g., ADDR₀ and ADDR₁ correspond to cache lines CL₀ and CL₁ respectively. Valid bits 38 indicate whether the data stored in the data arrays 40 are valid. For example, cache line CL₀ may be enabled and valid, whereas cache line CL₁ may be disabled and invalid.

Controller 26 includes compare logic 42 and word select logic 44. The controller 26 may receive an address request 45 from the AGU 22 via an address bus, and data may be transferred between the controller 26 and the ALU 24 via a data bus. The size of address request 45 may vary depending on the architecture of the system 10. Address request 45 may include an upper portion ADDR [H] that indicates which cache line the desired data is located in, and a lower portion ADDR [L] that indicates the desired word within the cache line. Compare logic 42 may compare a first part of ADDR[H] to the contents of tag memory 36, where the contents of the tag memory 36 that are compared are the cache lines indicated by a second part of ADDR [H]. If the requested data address is located in this tag memory 36 and the valid bit 38 associated with the requested data address is enabled, then compare logic 42 generates a "cache hit" and the cache line may be provided to the word select logic 44. Word select logic 44 may determine the desired word from within the cache line based on the lower portion of the data address ADDR[L], and the requested data word may be provided to the processor 12 via the data bus. Otherwise, compare logic 42 generates a cache miss causing an access to the main memory 16. Decode logic 20 may generate the address of the data request and may provide the controller 26 with additional information about the address request. For example, the decode logic 20 may indicate the type of data access, i.e., whether the requested data address belongs on the stack 32 (illustrated in Figure 1). Using this information, the controller 26 may implement cache management policies that are optimized for stack based operations as described below.

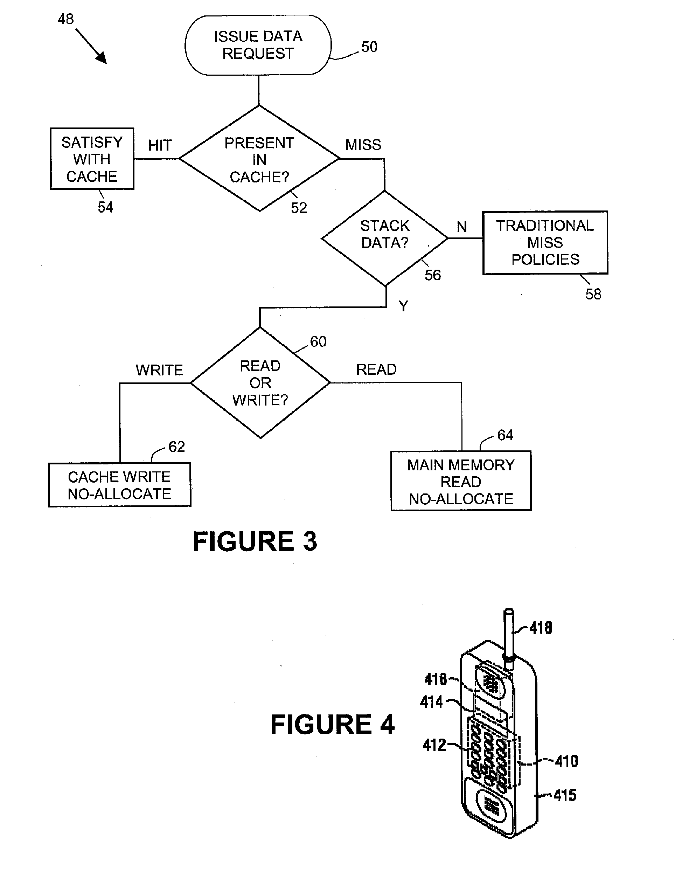

Figure 3 illustrates an exemplary cache management policy 48 that may be implemented by the controller 26. Block 50 illustrates a request for data. As a result of the data request, the AGU 22 may provide the address request 45 to the controller 26. Controller 26 then may determine whether the data is present in cache memory 14, as indicated by block 52. If the data is present in cache memory 14, a cache hit may be generated, and cache memory 14 may satisfy the data request as indicated in block 54. Alternatively, the controller 26 may determine that the requested address is not present in the cache memory 14 and a "cache miss" may be generated. Controller 26 may then determine whether the initial data request (block 50) refers to data that is part of the stack 32, sometimes called "stack data", as indicated by block 56. Decode logic 20, illustrated in Figure 2, may provide the controller 26 with information indicating whether the initial request for data was for stack data. In the event that the initial request for data does not refer to stack data, then traditional read and write miss policies may be implemented as indicated by block 58. For example, one cache miss policy that may be implemented when the initial data request was a write operation is a "write allocate". Write allocating involves bringing a desired cache line into cache memory 14 from the main memory 16 and setting its valid bit 38. Preferably, the data write is done to update the data within the cache memory 14 either when the cache line has been loaded into cache memory 14 or while the cache line is being loaded. Another cache miss policy resulting from a write operation is called "write no-allocate". A write no-allocate operation involves updating data in main memory 16, but not bringing this data into the cache memory 14. Since no cache lines are transferred to cache memory 14, the valid bits 38 are not set or enabled.

If the requested data is stack data (per block 56), stack based cache management policies may be implemented instead of a traditional cache management policy. The stack based cache management policies may be further adapted depending on whether the initial request for data was a read request or a write request, as indicated in block 60. As a result of the processor 12 pushing and popping data to and from the top of the stack 32, the stack 32 expands and contracts. Data are pushed on the stack and popped off of the top of the stack in a sequential manner-i.e., data is not accessed with random addresses but instead with sequential addresses. Also, for the sake of the following discussion, it will be assumed that when the system 10 is addressing stack data, the corresponding address in memory increases as the stack is growing (e.g. system 10 is pushing a value on to the stack). When stack data that is written to cache memory 14 within a new cache line it is always written to the first word of this cache line and the subsequent stack data are written to the following words of the cache line. For example, in pushing stack data to cache line CL₀ (illustrated in Figure 2), word W₀ would be written to before word W₁. Since data pushed from the processor 12 represents the most recent version of the data in the system 10, consulting main memory 16 on a cache miss is unnecessary.

In accordance with some embodiments, data may be written to cache memory 14 and the associated line set to valid using valid bit 38 on a cache miss without fetching cache lines from main memory 16, as indicated by block 62 on cache supporting write allocate policy. In this manner, if a cache miss occurs when data is to be written from the processor 12 to the first word of a cache line, then the system 10 may disregard fetching the data from memory 16 (since data from the processor 12 is the most recent version in the system 10). Valid bits 38 associated with the various cache lines then may be enabled so that subsequent words within the cache line may be written without fetching from main memory 16. Similarly, on cache supporting only write no-allocate policy, the write data is done only within the cache and the write to the main memory may be avoided. Accordingly, the time and power associated with accessing main memory 16 may be minimized. In addition, the bandwidth may be improved as a result of fewer transfers between cache memory 14 and main memory 16.

Similarly, due to the sequential nature of the stack 32, a cache miss that occurs when reading stack data may load a new line within the cache memory 14 unnecessarily. For example, when reading data from the stack 32, if the cache memory 14 is checked and the first word in a cache line generates a cache miss, then subsequent words in that cache line will not generate cache hits. Accordingly, preferred embodiments may avoid loading the cache memory 14 when stack data is being read. In this manner, if a cache miss occurs when reading stack data from the first word of a cache line, then the system 10 may disregard fetching the subsequent stack data from memory 16 and may forward the single requested data to system 10. Cache lines in cache memory 14 that are to be replaced are termed "victim lines". Since data may be provided to the processor 12 using the main memory 16, and fetching data from main memory 16 may be disregarded, data in the victim lines may be maintained so that useful data may remain in the cache.

Although the embodiments refer to situations where the stack 32 is increasing, i.e., the stack pointer incrementing as data are pushed onto the stack, the above discussion equally applies to situations where the stack 32 is decreasing, i.e., stack pointer decrementing as data are pushed onto the stack. Also, instead of checking of the first word of the cache line during the cache to adapt the cache policy, checking of the last words of the cache line is done. For example, if the stack pointer is referring to word W_{N} of a cache line CL₀, and a cache miss occurs from a read operation (e.g., as the result of popping multiple values from the stack 32), then subsequent words, i.e., W_{N-1}, W_{N-2}, may also generate cache misses.

As was described above, stack based operations, such as pushing and popping data, may result in cache misses. The micro-stack 25 may initiate the data stack transfer between system 10 and the cache memory 14. For example, in the event of an overflow or underflow operation, as is described in copending application entitled "A Processor with a Split Stack," filed , serial no. (Atty. Docket No.: TI-35425), the micro-stack 25 may push and pop data from the stack 32. Stack operations also may be originated by a stack-management OS, which also may benefit from the disclosed cache management policies by indicating prior to the data access that data belong to a stack and thus optimizing those accesses. Furthermore, some programming languages, such as Java, implement stack based operations and may benefit from the disclosed embodiments.

As noted previously, system 10 may be implemented as a mobile cell phone such as that illustrated in Figure 4. As shown, a mobile communication device includes an integrated keypad 412 and display 414. The processor 12 and other components may be included in electronics package 410 connected to the keypad 412, display 414, and radio frequency ("RF") circuitry 416. The RF circuitry 416 may be connected to an antenna 418.

While the preferred embodiments of the present invention have been shown and described, modifications thereof can be made by one skilled in the art without departing from the spirit and teachings of the invention. The embodiments described herein are exemplary only, and are not intended to be limiting. Many variations and modifications of the invention disclosed herein are possible and are within the scope of the invention. For example, the various portions of the processor based system may exist on a single integrated circuit or as multiple integrated circuits. Also, the various memories disclosed may include other types of storage media such as disk array 17, which may comprise multiple hard drives. Accordingly, the scope of protection is not limited by the description set out above. Each and every claim is incorporated into the specification as an embodiment of the present invention.

## Claims

1. A system, comprising:
a processor;
a memory coupled to the processor;
a stack that exists in memory and contains stack data;
a memory controller coupled to the memory;
wherein the processor issues data requests; and
wherein the memory controller adjusts memory management policies based on whether the data requests refer to stack data.

2. The system of claim 1, wherein the memory comprises a first level of memory and a second level of memory, and wherein the first level of memory is substantially faster than the second level of memory.

3. The system of claim 2, wherein the first level of memory comprises a cache memory that implements a cache allocation policy, and wherein the cache allocation policy is adjusted based on the type of data access requested.

4. The system of claim 3, wherein the allocation policy is adjusted when the type of data access refers to stack data that corresponds to a predetermined word in a cache line and the cache line is not present in the cache memory.

5. The system of claim 4, wherein the type of data request involves writing to the stack.

6. The system of claim 5, wherein adjusting the memory management policies includes allocating the cache line containing stack data within the cache memory, and updating the stack data within the cache line without fetching data from the secondary memory.

7. The system of claim 4, wherein the type of data request involves reading from the stack.

8. The system of claim 7, wherein adjusting the memory management policies includes not allocating the cache line containing stack data within the cache memory, and forwarding the stack data from the secondary memory.

9. The system of any of claim 4-8, wherein the predetermined word is the first word in the cache line.

10. The system of any of claim 4-8, wherein the predetermined word is the last word in the cache line.

11. A method of managing memory, comprising:
issuing a request for data;
indicating whether the requested data is stack data; and
varying the memory management policies depending on whether the requested data is stack data.

12. The method of claim 11, further comprising determining if the requested data corresponds to a predetermined word in a cache line in a cache memory.

13. The method of claim 12, further comprising determining whether the request for data is a write request or a read request.

14. The method of claim 13, wherein the request for data is a write request for stack data and the method further comprises writing data to the cache line without fetching data from a main memory.

15. The method of claim 14, wherein the predetermined word is the first word in the cache line.

16. The method of claim 14, further comprising enabling a valid bit associated with the cache line.

17. The method of any of claim 13-16, wherein the request for data is a read request for stack data and the method further comprises reading data from a main memory without allocating a new cache line within the cache memory, and forwarding the data to the processor.
